# EUROPÄISCHE PATENTSCHRIFT

(11) **EP 2 280 290 B1**
(45) Veröffentlichungstag und Bekanntmachung des Hinweises auf die Patenterteilung: **14.11.2012**
(21) Anmeldenummer: 10007075.4
(22) Anmeldetag: 09.07.2010
(51) Int. Cl.: G01S 13/78, G01S 13/87, G01S 7/285

(54) **Sekundärradarsignalempfänger und Verfahren zur Bestimmung definierter Empfangszeitpunkte von Sekundärradarsignalen in einem Multilaterationssystem**
Secondary signal receiver and method for determining defined receiver times of secondary radar signals in a multilateration system
Récepteur de signal radar secondaire et procédé de détermination de moments de réception définis de signaux radar secondaires dans un système de multilatération

(30) Priorität: 10.07.2009 DE 102009032773
(43) Veröffentlichungstag der Anmeldung: 02.02.2011
(73) Patentinhaber: FCS Flight Calibration Services GmbH, 38108 Braunschweig (DE)
(72) Erfinder: Bredemeyer, Jochen, 30823 Garbsen (DE)
(74) Vertreter: Gerstein, Hans Joachim

(56) Entgegenhaltungen:
- EP-A2- 1 972 962
- WO-A1-2010/139502
- US-A- 5 196 856
- US-A- 5 218 562
- US-B1- 6 768 445
- STEVENS M C ED - STEVENS M C: "Secondary Surveillance Radar" 1. Januar 1988 (1988-01-01), SECONDARY SURVEILLANCE RADAR, NORWOOD, ARTECH HOUSE, US, PAGE(S) 168 - 170 , XP002154909

## Beschreibung

Die Erfindung betrifft ein Verfahren zur Bestimmung definierter Empfangszeitpunkte von Sekundärradarsignalen der Luftfahrt in einem Multilaterationssystem, wobei die hier genutzten Sekundärradarsignale kohärent abgestrahlte Signalimpulse enthaltende Datenpakete sind.

Die Erfindung betrifft weiterhin einen Sekundärradarsignalempfänger mit einem Hochfrequenzsignal-Empfangsteil mit einem Antenneneingang, einem Nutzsignalausgang für ein Basisband-Sekundärradarsignal und einem binären Phaseninformationsausgang mit einer Phaseninformation des Sekundärradarsignals, wobei das Hochfrequenzsignalempfangsteil zum Empfang, zur Filterung und zur Verstärkung eines Hochfrequenzsignals eingerichtet ist.

Das Sekundärradar bildet zusammen mit dem Primärradar das Rückgrat der Flugsicherung. Mit Hilfe des Sekundärradars werden in Luftfahrzeugen eingebaute Luftfahrt-Transponder auf einer Abfragefrequenz von 1030 MHz abgefragt, die sodann auf einer Antwortfrequenz von 1090 MHz eine der Abfrage entsprechende Antwort ausstrahlen. Dieses Transponder-Antwortsignal enthält entsprechend Datenpakete in Form von in definierten Mustern aufgebauten Signalpulsen, aus denen die Nutzinformation abgeleitet werden kann.

Weiterhin werden Kollisionsschutzgeräte in allen Luftfahrzeugen ab 5,7t eingesetzt, die die Transponder anderer Luftfahrzeuge wie ein Sekundärradar auf 1030 MHz abfragen und die Antwort auf 1090 MHz erwarten, um durch Laufzeitmessung die Schrägentfernung zu berechnen und die barometrische Höhe zu erhalten. Dieses "Traffic Alert and Collision Avoidance System" (TCAS, U.S.-Bezeichnung) bzw. "Airborne Collision Avoidance Systems" (ACAS, ICAO-Bezeichung) genannte System basiert insbesondere auf dem Sekundärradarprinzip der Betriebsart "Mode S", da hierbei einzelne Luftfahrzeuge selektiv abgefragt werden können.

In Multilaterationssystemen werden an mindestens drei unterschiedlichen Empfangsstandorten mit untereinander synchronisierten Uhrzeiten die Signale der Transponder empfangen und datiert und die Differenzenbildung der Empfangszeitpunkte (Time of Arrival TOA) die Laufzeitunterschiede der Signale berechnet. Der zu bestimmende zweidimensionale Standort des Luftfahrzeugs befindet sich dann im Kreuzungspunkt von Hyperbelstandlinien zwischen jeweils zwei Sensoren.

Bei Multilaterationssystemen unterscheidet man zwischen Nah- und Weiterbereichsanwendungen. Zur Kontrolle des Luftverkehrs im Nahbereich (Entfernung zwischen Luftfahrzeug und jedem Multilaterationssensor <5km) ist die Multilateration meist Bestandteil eines Gesamtkonzepts zur Rollfeldverkehrsführung (Surface Movement Guidance Controls System SMGCS) und wird durch mehrere andere Sensortypen ergänzt.

Auf Flughafenoberflächen sind Kollisionsschutzgeräte abgeschaltet und erzeugen somit keine Abfragen auf 1030 MHz, während die Transponder auf 1090 MHz weiterhin aktiv bleiben. Die Sensoren können daher nur die Aussendungen der Transponder datieren, um die differentiellen Empfangszeitpunkte zu bilden.

Zur Kontrolle von Luftfahrzeugen im Streckenflug ist die Weitbereichsmultilateration (Wide Area Mulilateration WAM) geeignet. Hierbei können einzelne Sensoren eines Systems über 100 km auseinanderliegen und müssen dennoch für die Signalsauswertung zeitlich gut genug synchronisiert sein. Es entspricht dem Stand der Technik, dass auch bei diesem WAM-System nur die Transponder-Aussendungen auf 1090 MHz zur Datierung in den Sensoren genutzt werden, die in den meisten Fällen aber auch vorhandenen Aussendungen der Kollisionsschutzgeräte hingegen bleiben ungenutzt. Aufgabe der vorliegenden Erfindung ist es, auch diese Signale zu datieren und mit einem speziellen Verfahren die Streuung des Empfangszeitpunktes als Ausgangspunkt der Ortung durch Multilateration zu minimieren.

Eine grundsätzliche Realisierung eines Multilaterationssystems auf der Basis von Luftfahrt-Transpondern der Modi A/C/S ist u. a. in US 5,144,315 A sowie US 5,999,116 A vorgeschlagen. Um die Zeitdifferenz der Ankunftszeitpunkte der Sekundärradarsignale zu bestimmen, werden die dekodierten Datenpakete der Modi A/C/S in Verbindung mit Zeitstempeln ausgewertet, die von mehreren Bodenstationen erhalten werden. Die Zeitgeber in jeder Bodenstation bilden aber die Quelle der Zeitinformation, wobei diese Zeitgeber der Bodenstationen miteinander synchronisiert sind. Die Synchronisation der Zeitgeber der Bodenstation erfordert jedoch einen erheblichen Aufwand. Die Bodenstationen müssen dann nämlich miteinander so vernetzt sein, dass Synchronisationssignale unverzögert oder mit vorbekannter Verzögerungszeit zwischen den Bodenstationen ausgetauscht werden können. Ist eine drahtgebundene Vernetzung nicht möglich, so kann alternativ ein definierter Referenzpunkt des Datenpakets aus dem digitalen abgetasteten BasisbandSignal eines oder mehrerer Referenztransponder mit bekanntem Standort abgeleitet werden. Andere Synchronisationsmechanismen wie der Empfang von Satellitensignalen des Systems GPS sind derzeit noch nicht ausgereift, da die Empfangszeitpunktstreuung dieser Signale zu groß ist für die geforderte Genauigkeit bei der Ortung durch Multilateration. Die Auswertung von Transponder-Antworten erfolgt herkömmlicherweise durch Auswertung der Impulsformen des gleichgerichteten Amplitudenanteils, als des Basisbandes. Aufgrund der Überlagerung des Sekundärradarsignals mit Rauschen und durch die Mehrwegeausbreitung des Sekundärradarsignals sowie der endlichen Systembandbreite besteht eine nicht unerhebliche Messunsicherheit des Empfangszeitpunktes in Größenordnungen von 100ns, was eine große Zahl von Multilaterationssensoren erforderlich macht, um trotz dieser Unsicherheit eine den Anforderungen genügende Ortungsgenauigkeit zu erzielen.

US 6,094,169 A offenbart zur Erhöhung der Genauigkeit solcher Multilaterationssysteme ein Korrekturverfahren unter Ausnutzung eines Nebenkeulen-Unterdrückungspulses P2 eines Sekundärradars der Betriebsart "Mode A/C", der als Referenzsignal aus einer bekannten Position zur wechselseitigen Zeitsynchronisation der Sensoren und damit zur Bestimmung einer Fehlerkorrektur dient.

US 5,089,822 offenbart einen Sekundärradarsignal-Empfänger, bei dem zur Demodulation eines Mode S-Abfragetelegramms ein Präambel-Detektor das Basisbandsignal (Log-Video) überwacht und bei Feststellung ein Zeitfenster öffnet, innerhalb dessen ein Synchronisationsphasenumkehr-Detektor den Ausgang eines FIR-Filters testet, ob ein Synchronisationsphasenumkehrsignal übertragen wurde. Der Synchronisationsphasenumkehr-Detektor aktiviert nach Erkennung einer Phasenumkehr einen Taktgeber.

Ausgehend hiervon ist es Aufgabe der vorliegenden Erfindung, ein Verfahren zur Bestimmung definierter Empfangszeitpunkte mit geringer Messunsicherheit von Sekundärradarsignalen in einem Multilaterationssystem sowie einen zur Durchführung des Verfahrens geeigneten Sekundärradarsignalempfänger zu schaffen.

Die Aufgabe wird mit dem Verfahren der eingangs genannten Art gelöst durch,
- Ermitteln charakteristischer Phaseninformationen eines empfangenen Sekundärradarsignals, durch Überführen eines Zwischenfrequenzsignals des empfangenen Sekundärradarsignals in ein binäres Phasensignal;
- Korrelieren des binären Phasensignals mit einer Musterphasencodefolge durch Berechnen der Hamming-Distanzen zwischen der Phaseninformation eines Abschnitts eines empfangenen Sekundärradarsignal-Datenpakets und einer Musterphasencodefolge unter Relativverschiebung der Musterphasencodefolge in Bezug auf das Sekundärradarsignal-Datenpaket und Erkennen einer bestmöglichen Übereinstimmung zwischen der Musterphasencodefolge mit dem Datenpaketabschnitt bei minimaler Hamming-Distanz;
- Bestimmen eines für die Musterphasencodefolge definierten Referenzpunktes im Datensignal als Position im empfangenen Datenpaket, die bei bestmöglicher Übereinstimmung der Musterphasencodefolge mit dem Phasensignal des Sekundärradarsignals mit dem Referenzpunkt der Musterphasenfolge überlappt;
- Zuordnen eines Empfangszeitpunktes zu dem Referenzpunkt.

Gemäß der Lehre der vorliegenden Erfindung wird somit zur Bestimmung eines definierten Empfangszeitpunktes ein Referenzpunkt im Sekundärradarsignal nicht wie üblich anhand ausschließlich der Amplitudeninformationen (Pulsform) im Mode A/C/S-Antwortsignalen (1090 MHz) durchgeführt, bei der meist die ansteigenden Flanken einzelner Pulse als Ankunftszeitpunkte datiert werden. Vielmehr soll die Phaseninformation des Sekundärradarsignals ausgewertet werden, um einen Empfangszeitpunkt einem Referenzpunkt im Sekundärradarsignal zuordnen zu können. Hierzu werden charakteristische Phaseinformationen des empfangenen Sekundärradarsignals ermittelt und aus diesen charakteristischen Phaseninformationen ein Referenzpunkt im Sekundärradarsignal bestimmt. Der Einfluss von Rauschen sowie Mehrwegeausbreitung auf den Amplitudenverlauf der Pulse und damit auf ihre Flanken ist größer als das dadurch entstehende Phasenrauschen.

Diese charakteristischen Phaseninformationen, wie insbesondere Phasenwechsel einer Abfrage eines Kollisionsschutzgerätes in der Betriebsart "Mode S", können dann zur Bestimmung des Referenzpunktes im Sekundärradarsignal genutzt werden, was zu einer deutlich verringerten Streuung des Empfangszeitpunktes führt.

Voraussetzung ist allerdings, dass der Oszillator der Sekundärradaraussendung stetig läuft und es nicht zu Phasensprüngen kommt. Die zur Auswertung geeigneten Sekundärradarsignale müssen folglich kohärent sein, was bei einer Mode S-Abfrage immer der Fall ist. Bei Luftfahrt-Transpondern hingegen muss dies nicht zwingend sein, da die Antwort aus einzelnen Pulsen besteht, die auch durch einen immer wieder neu angestoßenen Oszillator erzeugt werden können. In diesem Fall ist die Bestimmung einer Ankunftszeit aus dem dann nicht-kohärenten Transpondersignal ausschließlich über das Basisbandsignal möglich.

Unter einem Sekundärradarsignal werden nicht nur Aussendungen eines sich in der Regel drehenden Transponder-Abfrageradars verstanden, sondern auch Aussendungen von Transpondern als Antwort auf eine solche Transponderabfrage sowie die bordseitigen Abfragen der Kollisionsschutzgeräte.

Vorteilhafter Weise wird eine Priorisierung der zur Bestimmung definierter

Empfangszeitpunkte genutzten Signale und Signalsquellen durchgeführt, so dass je nach Verfügbarkeit die zur Auswertung von Phaseninformationen ab besten geeigneten Signale bevorzugt ausgewertet werden. Hierzu wird überprüft, ob das betreffende Luftfahrzeug über geeignete Kollisionsschutzgeräte und Luftfahrzeugtransponder verfügt, die kohärente Signale aussenden. Die Signale von Kollisionsschutzgeräten, z. B. für die Frequenz 1030 MHz werden bei Verfügbarkeit den kohärenten Signalen von Luftfahrzeug-Transpondern z. B. für die Frequenz 1090 MHz vorgezogen. Im Fall, dass keine kohärenten Signale verfügbar sind, erfolgt die Empfangzeitpunktbestimmung auf herkömmliche Weise im Basisband anhand der Amplitudeninformation ohne Auswertung der Phase.

Für das Sekundärradarsignal wird eine Musterphasencodefolge definiert. Ein für die Musterphasenfolge definierter Referenzpunkt wird dann im Sekundärradarsignal als die Position im Datenpaket bestimmt, die bei bestmöglicher Übereinstimmung der Musterphasencodefolge mit dem Phasesignal des Sekundärradarsignals mit dem Referenzpunkt der Musterphasenfolge überlappt.

Es wird somit vorgeschlagen, die Musterphasencodefolge über die empfangenen Phasendaten zu legen und durch Relativverschiebung die Überlappungsposition mit der bestmöglichen Übereinstimmung von Mustercodefolge und Phasendaten zu bestimmten. Gemäß den Grundlagen der Codierungstheorie kann dies durch Berechnen der Hamming-Distanz zwischen der Phaseninformation eines Abschnitts eines empfangenen Sekundärradarsignal-Datenpakets und der Musterphasencodefolge durchgeführt werden, wenn die gemessene Sekundärradarsignalphase als Code einer bestimmten Länge aufgefasst wird. Der bekannte Referenzpunkt der Mustercodefolge, dem ein Empfangszeitpunkt zugeordnet werden soll, wird bei bestmöglicher Überlappung dann auf die entsprechende Position in den Phasendaten abgebildet. Auf diese Weise lässt sich aus einem vorzugsweise binären Phasensignal des Sekundärradarsignals ein charakteristischer Referenzpunkt bestimmen, dem ein Empfangszeitpunkt zugeordnet wird.

Das zur Korrelation genutzte Phasensignal ist das digitalisierte Bandpasssignal auf der ZF-Ebene, d. h. das digitalisierte, amplitudenbegrenzte Zwischenfrequenzsignal.

Um die Korrelation der ermittelten Phaseninformation mit einer Musterphasencodefolge durch Berechnen der kleinsten Hamming-Distanz zu ermitteln, wird die bestmögliche Übereinstimmung nach Überprüfung einer Vielzahl von Überlappungspositionen durch Relativverschiebung der Musterphasencodefolge in Bezug auf das empfangene Sekundärradarsignal-Datenpaket gesucht. Bei der minimalen Abweichung, d.h. der geringsten Hamming-Distanz, besteht eine größtmögliche Korrelation und eine geringste zeitliche Streuung zwischen Musterphasencodefolge und dem entsprechenden Phaseinformationsabschnitt eines empfangenen Sekundärradarsignal-Datenpakets. Der ermittelte Wert der Hamming-Distanz lässt außerdem auf die Güte des Empfangszeitpunktes schließen, und es wird ein Grenzwert eingeführt, bis zu dem die Information der Ankunftszeit tatsächlich ausgewertet wird.

Besonders vorteilhaft ist es, wenn die Mode S-Abfragesignale von Kollisionsschutzsystemen genutzt werden, da diese auf jeden Fall kohärent sind und an charakteristischen Stellen 180°-Phasenwechsel aufweisen. Die Datentelegramme beispielsweise einer Mode S-Abfrage eines ACAS-Kollisionswarnsystems sind mit 4 MBit-differenzphasenkodiert und enthalten über die Zeitdauer des Informationsgehalts (1.75µs+14µs bzw. +28ps) fortwährend Signalenergie und definierte Phasenwechsel. Die kohärente und damit auswertbare Codelänge einer Mode S-Abfrage ist daher deutlich kompakter als die bei der Modulationsart "Pulspositionsmodulation" durch Rauschen unterbrochene Aussendung der Antworten von Luftfahrzeug-Transponder auf 1090 MHz und weisen noch bessere Korrelationseigenschaften auf, sodass die Streuung des Empfangszeitpunktes noch geringer ist.

Es ist daher vorteilhaft, wenn zur Bestimmung definierter Empfangszeitpunkte von Sekundärradarsignalen von Luftfahrzeugen, die mit Luftfahrt-Transpondern und optional mit Kollisionsschutzgeräten ausgerüstet sind, bei einer Verfügbarkeit die Abfragesignale von Kollisionsschutzgeräten (1030 MHz) anstelle der Antworten von Luftfahrzeug-Transpondern (1090 MHz) zur Bestimmung der Empfangszeitpunkte genutzt werden.

Je nach Ausrüstungsgrad des Luftfahrzeuges wird somit zwischen unterschiedlich messbaren Empfangszeitpunkten mit zunehmender Streuung entschieden, wobei eine Priorisierung der Mode S-Abfragen der Kollisionsschutzgeräte erfolgt.

Wenn das Luftfahrzeug ein ACAS-Gerät besitzt und seine Mode S-Abfrage der Formate UF00 oder UF16 empfangen werden kann, wird der Empfangszeitpunkt mit der korrelierten Codephase der ACAS-Abfrage auf der Frequenz von 1030 MHz ermittelt. Wenn das Luftfahrzeug nur mit einem kohärenten Luftfahrzeug-Transponder ausgerüstet ist, oder nur ein solches kohärentes Transponder-Signal empfangen werden kann, wird der Empfangszeitpunkt mit der korrelierten Codephase des Transponder-Signals ermittelt. Wenn nur ein nicht-kohärenter Transponder an Bord des Luftfahrzeuges installiert ist, so wird dies im Sekundärradarsignalempfänger festgestellt und die Bestimmung der Ankunftszeit ausschließlich auf Basis der Amplitudeninformation des Basisbandsignals durchgeführt.

Die Aufgabe der Erfindung wird weiterhin durch einen Sekundärradarsignalempfänger mit Merkmalen des Anspruchs 8 gelöst.

Dabei lässt sich der limitierte Phasenausgang eines logarithmischen Verstärkers mit geringem Aufwand z. B. mit Hilfe eines Komparators mit einem Bit abtasten. Das digitale 1 Bit-Phasensignal am Phaseninformationsausgang lässt sich dann auf einfache Weise mit parallel arbeitender Logik in einem programmierbaren Logikbaustein (FPGA) auswerten, beispielsweise um durch Berechnung Hamming-Distanz die bestmögliche Übereinstimmung einer Referenzcodefolge mit den Phaseninformationen zur Bestimmung des Referenzpunktes zu ermitteln.

Befinden sich mindestens mehrere Sensoren eines Multilaterationssystems im Sichtbereich eines Mode S-fähigen Sekundärradar-Interrogators (z. B. Flughafenradar: Airport Surveillance Radar ASR), so können die nach dem oben beschriebenen Korrelationsverfahren ermittelten Empfangszeitpunkte der vom Radar ausgesendeten Mode S-Abfragen genutzt werden, um die lokalen Uhren der Sensoren untereinander zu synchronisieren bzw. einen anderen Synchronisierungsvorgang zu unterstützen, da die Signallaufzeiten zwischen festem Radarstandort und den ebenfalls festen Sensorstandorten bekannt und unveränderlich sind. Dabei ist es unerheblich, ob die Mode S-Abfrage aus der Vorzugsrichtung der Sekundärradarantenne oder aus einem Nebenzipfel des Antennendiagramms empfangen wurde. Eine charakteristische Codefolge der Radarabfrage zur Bestimmung der minimalen Hamming-Distzanz lässt sich unabhängig von dem bei der Nebenzipfelunterdrückung ausgeblendeten Referenzphasenwechsel (Sync Phase Reversal SPR) auch allein aus den Mode S-Format-Bits der Abfrage bei den Abfragetypen UF04/05/11/20/21 bilden, sofern das Signal-Rauschverhältnis der Abstrahlung aus einem Nebenzipfel groß genug ist.

Vornehmlich sollten jedoch die Abfragen der Typen UF04/05/20/21 ausgewertet werden, da diese im Gegensatz zu der Abfrage UF11, die an alle Mode S-Transponder gerichtet ist, selektiv ein bestimmtes Flugzeug adressieren. Aufgrund der eindeutigen Flugzeugadresse z. B. bei UF04 etc. ist es im zentralen Multilaterationsalgorithmus leichter möglich, die relevante Ankunftszeit TOA aus der Vielzahl der Sekundärradarsignal-Abfragen zu notieren, da die Übereinstimmung der von den SekundärradarsignalEmpfängern notierten Adressen festgestellt werden kann. Die sequentiell ausgestrahlten Abfragen UF11 können trotz gleicher Bit-Inhalte mit etwas höherem Aufwand dennoch an jedem Sekundärradarsignalempfänger separiert und gemeinsam zugeordnet werden, da ihr zeitlicher Abstand mit mehreren Millisekunden deutlich größer ist als der Laufzeitunterschied bedingt durch die unterschiedliche Entfernungen der Sekundärradarsignalempfänger zum Radar.

In jedem Fall gilt die korrekt ermittelte Ankunftszeit TOA des Radars als Synchronisationszeit für alle Sekundärradarsignalempfänger (Sensoren), die die Abfrage empfangen konnten.

Bei der Nutzung mehrerer verteilt angeordneter Sekundärradarsignalempfänger als Multilaterationssensoren lassen sich die mehreren Empfängeruhren automatisch auf die Zeitvorgabe des gemeinsamen, die Mode S-Abfragen auslösenden Sekundärradars synchronisieren, ohne dass es hier zu weiteren infrastrukturrelevanten Maßnahmen, wie beispielsweise einer drahtgebundenen Kommunikationsverbindung zwischen den Sekundärradarsignalempfängern, bedarf. Die Zahl der durch das Radar ausgelösten Mode S-Abfragen beträgt in jedem Fall bedingt durch die Abfragen UF11, die sogenannten All-Call-Abfragen mehr als 100 pro Sekunde, auch wenn kein Mode S-Transponder im Erfassungsbereich des Radars liegt und speziell adressiert wird. Durch die Drehung der Sekundärradarantenne werden immer wieder unterschiedlicher Sensoren gleichzeitig im Erfassungsbereich der Haupt- und Nebenkeule liegen, so dass eine ständige Re-Synchronisation mehrerer Sensoren erfolgt, während hingegen andere in Minima des Antennendiagramms verweilen und kurzzeitig aufgrund des zu geringen Empfangspegels keine Korrelation der Mode S-Abfrage stattfinden kann.

Die Erfindung wird nachfolgend anhand der beigefügten Zeichnungen näher erläutert. Es zeigen:
- Figur 1 -: Skizze eines Multilaterationssystems mit einem zu ortenden Luftfahrzeug mit Transponder bzw. Kollisionsschutzgerät (ACAS), Sekundärradar-Interrogator und verteilt angeordneten Sekundärradarsignalempfängern;
- Figur 2 -: Darstellung einer Mode S-Abfrage, z.B. einer Kollisionsschutzgeräteabfrage;
- Figur 3 -: Darstellung einer Mode S-Transponderantwort;
- Figur 4 -: Blockdiagramm eines Sekundärradarsignalempfängers, realisiert als Doppelempfänger 1030/1090 MHz.

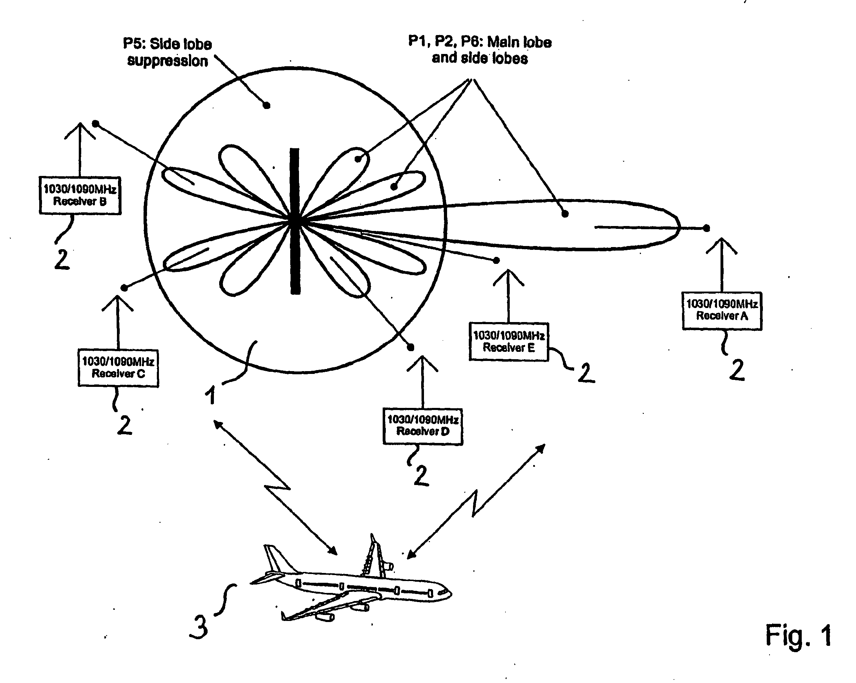

Figur 1 lässt eine Skizze eines Multilaterationssystems erkennen, bei dem ein Radar mit einer sich ständig um eine Rotationsachse drehenden Sekundärradarantenne 1 Sekundärradarsignalabfragen an in Funkreichweite befindliche Luftfahrzeuge 3 ausgesendet werden. Das Sekundärradar 1 ist beispielsweise im Bereich eines Flughafens positioniert. In der Umgebung des Sekundärradars 1 sind eine Mehrzahl von Sekundärradarsignalempfängern 2 verteilt angeordnet um die Aussendung des Sekundärradars 1 sowie die Sekundärradarsignalantworten der Transponder von Luftfahrzeugen 3 zu empfangen. Die Sekundärradarsignalempfänger 2 sind hierzu als Doppelempfänger zum Empfangen von Aussendungen auf den Frequenzen 1030 MHz und 1090 MHz ausgerüstet.

Erkennbar ist, dass die Pulse P1, P2 und P6 einer Mode S-Abfrage nach vorne mit einer Hauptkeule und weiteren Nebenzipfeln des Antennendiagramms ausgestrahlt wird. Die weiteren Zipfel sind beidseits im Winkel zur Hauptkeule ausgerichtet.

Weiterhin wird über eine zusätzliche Antenne ein Puls P5 zur Nebenkeulenunterdrückung omnidirektional abgestrahlt, welcher außer in der Hauptstrahlrichtung stärker als die Richtantenne des Sekundärradarsignals strahlt, sodass der Synchronisationsphasenwechsel SPR dadurch überlagert ist. Für die Erfindung ist dies jedoch unerheblich, da für die Erkennung der Mode S-Radarabfrage ausschließlich die Codefolge der ersten 5 Bits ausgewertet werden, nicht jedoch der SPR.

Zur Anwendung in einem Multilaterationssystem müssen von den einzelnen Sekundärradarsignalempfängern 2 ermittelten Ankunftszeiten (Time of Arrival TOA) der Transpondersignale der Luftfahrzeuge 3 in einen zeitlichen Zusammenhang gebracht werden. Hierzu können Referenztransponder an bekannten Standorten aufgestellt werden und eine Referenz-TOA aus dem Basisbandsignal, d.h. dem Amplitudensignal der Sekundärradarsignalantwort des Referenztransponders abgeleitet werden. Es kann aber auch ein Netzwerk von Leitungen zu jedem Sekundärradarsignalempfänger 2 aufgebaut werden. Dies führt jedoch bei einer großen Zahl von Standorten sowie bei außerhalb des Flughafengeländes liegenden Positionen zur Errichtung einer aufwändigen Infrastruktur.

Zur Reduzierung des Aufwands sollen daher die Aussendungen des Sekundärradars 1 mit zur Synchronisation herangezogen werden, was insbesondere dann möglich ist, wenn das Sekundärradar 1 mit der Betriebsart Mode S ausgerüstet ist und damit kohärente Sekundärradarsignale mit charakteristischen Phasenmustern aussendet. Das Sekundärradar 1 dreht sich und überstreicht z. B. alle vier Sekunden mit dem Hauptmaximum seiner Richtantenne einen einzelnen oder (bei einer großen Zahl von Sekundärradarsignalempfängern 2 (Sensoren)) mehrere Standorte der Sekundärradarsignalempfängers 2. An den anderen Standorten der Sekundärradarsignalempfänger 2 kann die Transponderabfrage über die Nebenzipfel der Richtantenne mit einem geringeren Pegel empfangen werden. Gleichzeitig kann es sein, dass an den anderen Standorten kein Empfang möglich ist, da diese bereits im Bereich der starken Einzugs nahe einer Nullstelle des Antennendiagramms liegen. Aufgrund ihrer Nähe zum Sekundärradar 1 werden jedoch immer noch einige Sekundärradarsignalempfänger 2 einen ausreichenden Signalpegel zur sicheren Korrelation erhalten. Abhängig von der Lage des Sekundärradars 1 auf dem Flughafen wird es also immer einige Sekundärradarsignalempfänger 2 geben, die gleichzeitig mehr oder weniger stark eine einzelne Mode S-Abfragen des Sekundärradars 1 empfangen.

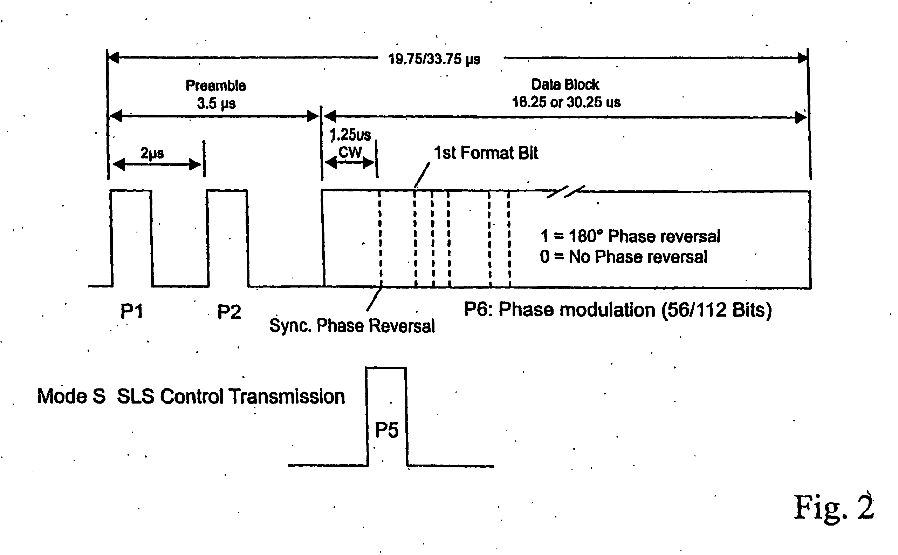

Figur 2 lässt ein Datenpaket eines Sekundärradarsignals einer Transponderabfrage im Mode S bei einer Frequenz von 1030 MHz erkennen. Ein kurzes Datenpaket hat eine Gesamtlänge von 19,75µs und ein langes Datenpaket eine Länge von 33,75µs. Das Mode S-Datenpaket enthält eine Präambel mit einer Länge von 3,sµs mit im Abstand von 2µs hintereinander ausgesendeten Impulsen P1 und P2. Nach der Präambel folgt der Datenblock in Form des Pulses P6 mit einer Länge von 16,25µs bzw. für ein langes Datenpaket 30,25µs. Der Puls P6 ist phasenmoduliert und enthält in der kurzen Form 56 und in der langen Form 112 Bits. Am Anfang des Pulses P6 wird ein phasenkontinuierliches Signal (CW) ausgesendet, auf das eine Synchronisationsphasenumkehr 180° (Sync Phase Reversal SPR) erfolgt. Dem SPR schließen sich mehrere Formatbits an. In dem phasenmodulierten Datenteil wird einer Phasenumkehr von 180 Grad der logische Wert "1" und einer kontinuierlichen Phase der logische Wert "0" zugeordnet.

Von dem SPR innerhalb des P6 Impulses ausgehend wird die Antwort eines Transponders 128µs später generiert. Die Nebenzipfelunterdrückung (P5) eines Radars überdeckt den SPR und verhindert seine Erkennung im Transponder und damit auch die Aussendung einer Antwort. Um trotzdem im Nebenzipfel eine Abfrageerkennung einer Radarabfrage im Sekundärradarsignalempfänger 2 zu ermöglichen, wird dieser die Phasenlagen der auf den SPR folgenden Formatbits der Abfrage UF04/05/11/20/21 auswerten, während bei der Auswertung einer Kollisionsschutzabfrage (UF00 oder UF16) der SPR wegen der nicht vorhandenen Nebenzipfelunterdrückung mit einbezogen wird.

Hierzu wird die bekannte Musterfolge im einleitenden Teil einer Mode S-Abfrage Nachricht herangezogen, die das Phasenverhalten des Datenpakets in dem entsprechenden Bereich beschreibt. Diese Mustercodefolge wird dann mit der empfangenen Phaseninformation des Datenpakets verglichen, indem die Mustercodefolge relativ zu der Phaseninformation des Sekundärradarsignals verschoben wird, bis eine minimale Abweichung zwischen Mustercodefolge und Datenpaket besteht (kleinste Hamming-Distanz). Am Punkt der minimalen Abweichung bestehen eine größtmögliche Korrelation und die geringste zeitliche Streuung zwischen Mustercodefolge und Sekundärradarsignal. Ein bekannter Referenzpunkt der Mustercodefolge kann dann auf die zugehörige Position im Datenpaket des empfangenen Sekundärradarsignals projiziert werden, so dass ein Empfangszeitpunkt diesem Referenzpunkt zugeordnet werden kann.

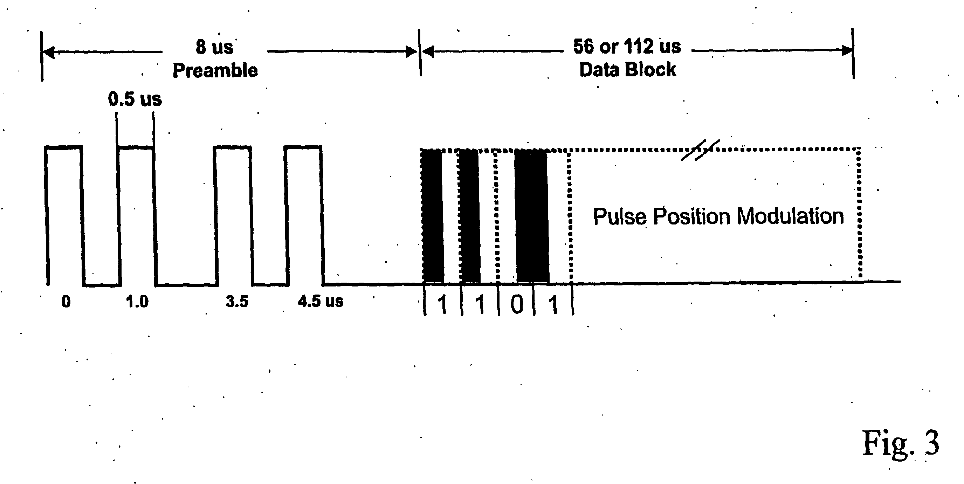

Auch die Sekundärradarsignal-Antworten von Transpondern in Luftfahrzeugen weisen charakteristische Codefolgen auf. Die Sekundärradarsignale der Antworten auf einer Frequenz von 1090 MHz sind in der Figur 3 skizziert.

Die Antwort im Mode S hat wiederum eine Präambel bestehend aus den Impulsen P1 bis P4, di im definierten Abstand voneinander und mit einer definierten Länge ausgesendet werden. Die 56 bzw. 112 Datenbits beginnen ab dem Zeitpunkt 8µs und sind pulspositionsmoduliert innerhalb eines sogenannten "Chips" der Länge 1µs, sodass für den Fall einer logischen "1" ein Puls der Dauer 0,5µs im linken Teil des Chips auftritt, während für eine logische "0" die rechte Hälfte belegt ist. Bei einer kohärenten Aussendung ist die gleiche Phasenlage in allen Pulsen P1 ... P4 sowie den Datenpulsen nach einem Vielfachen der Periodendauer der Trägerschwingung (1030 MHz) wieder auffindbar, während in den Pulslücken die Phase stark rauscht.

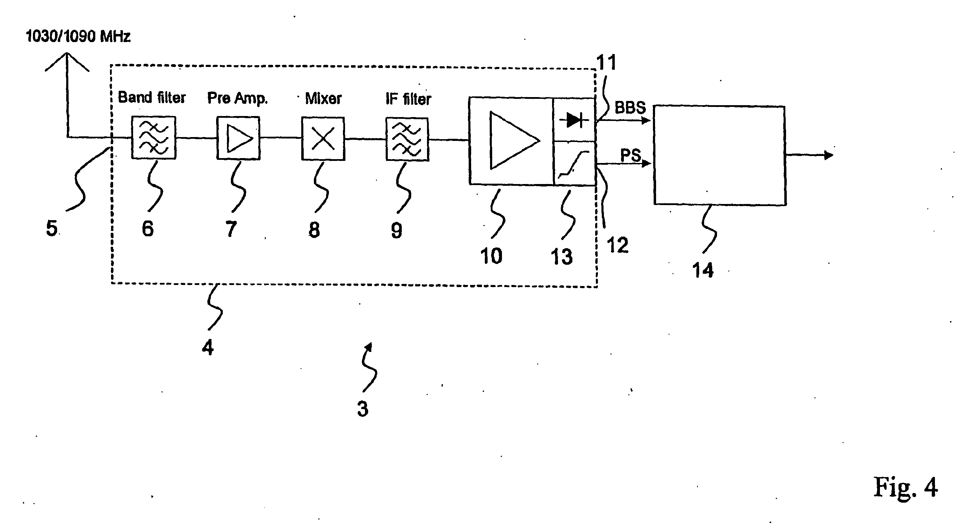

Figur 4 lässt ein Blockdiagramm eines geeigneten Sekundärradarsignalempfängers 2 erkennen, der zum Empfangen von Transponder-Abfragen mit einer Frequenz von 1030 MHz und Transponder-Antworten auf einer Frequenz von 1090 MHz empfängt. Hierzu ist in an sich bekannter Weise ein Hochfrequenzsignal-Empfangsteil 4 mit einem Antenneneingang 5, mindestens einen Bandpassfilter 5, einem Vorverstärker 7, einem Mischer 8 sowie einem Zwischenfrequenzfilter 9 für die Zwischenfrequenz IF vorgesehen, auf die das jeweilige Empfangssignal gemischt wird.

Das Hochfrequenzsignal-Empfangsteil 4 ist für die Empfangsfrequenzen 1030 MHz und 1090 MHz separat vorhanden, jedoch nur einfach skizziert.

Das Zwischenfrequenzsignal IF wird dem logarithmischen Verstärker 10 zugeführt, an dessen Nutzsignalausgang 11 das Basisbandsignal BBS mit der Amplitudeninformation sowie am Phaseninformationsausgang 12 das Phasensignal PS anliegt. Das noch analoge, aber durch den logarithmischen Verstärker im Dynamikbereich stark komprimierte Phasensignal PS (Begrenzer 13) kann mit einem Komparator in ein binäres Signal überführt werden.

Mindestens das Phasensignal PS am Phaseninformationsausgang 12 wird einer Synchronisationseinheit 14 zugeführt, die beispielsweise einen Signalprozessor enthalten kann. Die Synchronisationseinheit 14 und insbesondere der Signalprozessor ist beispielsweise durch Programmierung so eingerichtet, dass auf oben beschriebene Weise mit Hilfe eines Mustervergleichs einer Mustercodefolge mit dem Phasensignal PS ein Referenzpunkt im Sekundärradarsignal gesucht wird, dem ein Empfangszeitpunkt zugeordnet werden kann.

Dabei wird von der Synchronisationseinheit 14 zunächst überprüft, ob der Sender eines Transponders kohärente Impulse beispielsweise der Mode S-Antwortformate aussendet. Hierzu kann z. B. getestet werden, ob die empfangenen Phasenlagen mindestens der Präambelpulse P1 bis P4 untereinander im zeitlichen Raster zusammenhängen. Alle Phasenbits werden dazu in ein Schieberegister geschoben, das z. B. die Tiefe 5µs x 500 MHz = 2500 haben kann. Bezogen auf die Pulse P1 und P2 mit einem Abstand von 2µs für die Mode S-Abfrage und 1µs für die Mode S-Antwort bedeutet dies beispielsweise, dass über die Laufzeit der Pulse die Codefolge am Anfang des Schieberegisters und am Index, der sich durch den Abstand der Pulse und die Abtastrate von z. B. 500 MHz (z. B. 1µs x 500 MHz = 500) ergibt, abhängig von der Anstiegszeit weitgehend identisch sein muss. Wenn die Kohärenz durch die weitgehende Korrelation der Mustercodefolge mit den empfangenen Phasendaten belegt ist, so kann ein weiterer Prozess die Mustercodefolge so lange über die Pulse P1 bis P4 schieben, bis eine minimale Abweichung, wie z. B. die geringste Hamming-Distanz auftritt. Dieser Zeitpunkt ist derjenige größtmöglicher Korrelation und geringster Steuerung. Bei der Auswertung von Mode S-Abfragen ist sichergestellt, dass das Abfragetelegramm mit 4 Megabit pro Sekunde differenzphasencodiert ist und über diese Zeitdauer seines Informationsgehaltes fortwährend Signalenergie enthält. Die Mode S-Abfrage hat daher einen Vorteil gegenüber den pulspositionsmodulierten Datenbits im Antworttelegramm die jeweils durch Rauschen unterbrochen werden. Die kohärente und damit auswertbare Codelänge des Abfragetelegramms ist deutlich kompakter und weist noch bessere Korrelationseigenschaften als im Antwortkanal auf, sodass die Streuung des Empfangszeitpunktes noch geringer ist. Verbessert wird die Streuung noch dadurch, dass nicht nur der Sync Phase Reversal (SPR) Bestandteil des Codes ist, sondern bei z. B. dem verwendeten Telegram UF16 auch der Phasenwechsel des ersten Datenbits (0,5µs nach SPR), welches das höchstwertige Bit (Most Significant Bit MSB) des Abfrageformates darstellt.

## Patentansprüche

1. Verfahren zur Bestimmung definierter Empfangszeitpunkte von Sekundärradarsignalen in einem Multilaterationssystem, wobei die Sekundärradarsignale kohärent abgestrahlte Signalpulse enthaltende Datenpakete sind, **gekennzeichnet durch**
- Ermitteln charakteristischer Phaseninformationen eines empfangenen Sekundärradarsignals, **durch** Überführen eines Zwischenfrequenzsignals (IF) des empfangenen Sekundärradarsignals in ein binäres Phasensignal (PS);
- Korrelieren des binären Phasensignals (PS) mit einer Musterphasencodefolge **durch** Berechnen der Hamming-Distanzen zwischen der Phaseninformation eines Abschnitts eines empfangenen Sekundärradarsignal-Datenpakets und einer Musterphasencodefolge unter Relativverschiebung der Musterphasencodefolge in Bezug auf das Sekundärradarsignal-Datenpaket und Erkennen einer bestmöglichen Übereinstimmung zwischen der Musterphasencodefolge mit dem Datenpaketabschnitt bei minimaler Hammlng-Distanz;
- Bestimmen eines für die Musterphasencodefolge definierten Referenzpunktes im Datensignal als Position im empfangenen Datenpaket, die bei bestmöglicher Übereinstimmung der Musterphasencodefolge mit dem Phasensignal des Sekundärradarsignals mit dem Referenzpunkt der Musterphasencodefolge überlappt; und
- Zuordnen eines Empfangszeitpunktes zu dem Referenzpunkt.

2. Verfahren nach einem der vorhergehenden Ansprüche, **gekennzeichnet durch** Synchronisieren mindestens zweier Empfängeruhren des Multilaterationssystems, die zur Zeitstempelung eines Referenzpunktes des Datenpakets genutzt werden, in Abhängigkeit von der Zeitdifferenz des zeitlichen Abstands der ermittelten Empfangszeitpunkte von Referenzpunkten der Datenpakete zu einem zeitlichen Soll-Abstand.

3. Verfahren nach einem der vorhergehenden Ansprüche, **gekennzeichnet durch** Bestimmung definierter Empfangszeitpunkte von Sekundärradarsignalen von Luftfahrzeugen, die mit Luftfahrt-Transpondern und optional mit Kollisionsschutzgeräten ausgerüstet sind, indem bei Verfügbarkeit die Sekundärradarsignale von Kollisionsschutz-Transpondern (ACAS) an Stelle der Sekundärradarsignale von Luftfahrzeug-Transpondern vorrangig zur Bestimmung von Empfangszeitpunkten genutzt werden.

4. Verfahren nach einem der vorhergehenden Ansprüche, **gekennzeichnet durch** Bestimmung der Empfangszeitpunkte von Mode S-Abfragetelegrammen eines Kollisionsschutzgerätes oder einer Transponderabfrage **durch** ein Radar oder von Mode S-Antworten eines Transponders.

5. Verfahren nach einem der vorhergehenden Ansprüche, **gekennzeichnet durch** Nutzung von Datenpaketen von Sekundärradarsignalen, denen selektiv ein bestimmter Transponder zugeordnet werden kann.

6. Sekundärradarsignalempfänger (3) mit einem Hochfrequenzsignal-Empfangsteil (4), das einen Antenneneingang, einen Nutzsignal-Ausgang (10) für ein Basisband-Sekundärradarsignal (BBS) und einen Phaseninformationsausgang (11) mit einer Phaseninformation (PS) des Sekundärradarsignals hat, wobei das Hochfrequenzsignal-Empfangteil (4) zum Empfang, zur Filterung und Verstärkung eines Hochfrequenzsignals eingerichtet ist, **gekennzeichnet durch** eine Synchronisationseinheit (13), die mindestens mit dem Phaseninformationsausgang (11) verbunden ist und zur Bestimmung definierter Empfangszeitpunkte des Sekundärradarsignals (BBS) nach dem Verfahren nach einem der vorhergehenden Ansprüche arbeitet.

## Claims

1. Method for determining defined reception time points of secondary radar signals in a multilateration system, wherein the secondary radar signals are coherently radiated signal pulses containing data packets, **characterised by**
- Determining characteristic phase information of a received secondary radar signal by converting an intermediate frequency signal (IF) of the received secondary radar signal into a binary phase signal (PS);
- Correlating the binary phase signal (PS) with a phase sample code sequence by computing the Hamming distance between the phase information of a section of a received secondary radar signal data packet and a phase sample code sequence with relative displacement of the phase sample code sequence in relation to the secondary radar signal data packet and recognising an optimal match between the phase sample code sequence and the data packet section for minimal Hamming distance;
- Determining a defined reference point for the phase sample code sequence in the data signal as a position in the received data packet, which overlaps with the reference point of the phase sample code sequence for the best match of the phase sample code sequence with the phase signal of the secondary radar signal; and
- Associating a reception time point with the reference point.

2. Method according to Claim 1, **characterised by** synchronising at least two receiver clocks of the multilateration system, which is used for time stamping a reference point of the data packet, depending on the time difference between the time interval of the determined reception time points of reference points of the data packets and a desired time interval.

3. Method according to one of the preceding claims, **characterised by** determining defined reception time points of secondary radar signals of aircraft, which are equipped with air transport transponders and optionally with collision protection devices, while, where available, the secondary radar signals of collision protection transponders (ACAS) are preferentially used instead of the secondary radar signals of aircraft transponders for determining reception time points.

4. Method according to one of the preceding claims, **characterised by** determining the reception time points of Mode S request messages of a collision protection device or a transponder request by a radar or of Mode S responses of a transponder.

5. Method according to one of the preceding claims, **characterised by** the use of data packets of secondary radar signals, with which a specified transponder can be selectively associated.

6. Secondary radar signal receiver (3) with a high frequency signal reception part (4), which comprises an antenna input, a useful signal output (10) for a baseband secondary radar signal (BBS) and a phase information output (11) with secondary radar signal phase information (PS), whereby the high frequency signal reception part (4) is designed for receiving, for filtering and for amplifying a high frequency signal, **characterised by** a synchronising unit (13), which is connected at least to the phase information output (11) and operates according to the method of one of the preceding claims for determining defined reception time points of the secondary radar signal (BBS).

## Revendications

1. Procédé pour déterminer des instants de réception définis de signaux de radar secondaire dans un système de multilatération, les signaux de radar secondaire étant des paquets de données contenant des impulsions radar rayonnées cohérentes, **caractérisé par**
- détermination des informations de phase caractéristiques d'un signal de radar secondaire reçu en transformant un signal de fréquence intermédiaire (IF) du signal de radar secondaire reçu en un signal de phase binaire (PS) ;
- corrélation du signal de phase binaire (PS) avec un modèle de séquence de code de phase en calculant les distances de Hamming entre l'information de phase d'une section d'un paquet de données de signal de radar secondaire reçu et un modèle de séquence de code de phase en appliquant un décalage relatif du modèle de séquence de code de phase par rapport au paquet de données de signal de radar secondaire et détection d'une meilleure concordance possible entre le modèle de séquence de code de phase et la section du paquet de données avec une distance de Hamming minimale ;
- détermination d'un point de référence dans le signal de données défini pour le modèle de séquence de code de phase en tant que position dans le paquet de données reçu pour laquelle, avec la meilleure concordance possible entre le modèle de séquence de code de phase et le signal de phase, le signal de radar secondaire coïncide avec le point de référence du modèle de séquence de code de phase ; et
- affectation d'un instant de réception au point de référence.

2. Procédé selon la revendication 1, **caractérisé par** la synchronisation d'au moins deux horloges de récepteur du système de multilatération, lesquelles sont utilisées pour l'horodatage d'un point de référence du paquet de données, en fonction de la différence de temps entre l'écart dans le temps des instants de réception déterminés des points de référence des paquets de données et un écart dans le temps voulu.

3. Procédé selon l'une des revendications précédentes, **caractérisé par** la détermination d'instants de réception définis de signaux de radar secondaire d'aéronefs qui sont équipés de transpondeurs de navigation aérienne et, en option, d'appareils de protection anticollision, en utilisant pour la détermination des instants de réception, s'ils sont disponibles, les signaux de radar secondaire de systèmes anticollision embarqués (ACAS) en priorité à la place des signaux de radar secondaire des transpondeurs d'aéronef.

4. Procédé selon l'une des revendications précédentes, **caractérisé par** la détermination des instants de réception de télégrammes d'interrogation en mode S d'un appareil de protection anticollision ou l'interrogation d'un transpondeur par un radar ou de réponses en mode S d'un transpondeur.

5. Procédé selon l'une des revendications précédentes, **caractérisé par** l'utilisation de paquets de données de signaux de radar secondaire dont un transpondeur donné peut être affecté sélectivement.

6. Récepteur de signal de radar secondaire (3), comprenant une partie réception de signal à haute fréquence (4) qui possède une entrée d'antenne, une sortie de signal utile (10) pour un signal de radar secondaire en bande de base (BBS) et une sortie d'information de phase (11) avec une information de phase (PS) du signal de radar secondaire, la partie réception de signal à haute fréquence (4) étant configurée pour recevoir, pour filtrer et pour amplifier un signal à haute fréquence, **caractérisé par** une unité de synchronisation (13) qui est reliée au moins avec la sortie d'information de phase (11) et qui travaille pour déterminer les instants de réception définis du signal de radar secondaire (BBS) conformément au procédé selon l'une des revendications précédentes.
